Europäisches Patentamt

European Patent Office

Office européen des brevets

(19)

(11) Veröffentlichungsnummer : **0 062 937**
**B1**

(12) **EUROPÄISCHE PATENTSCHRIFT**

(45) Veröffentlichungstag der Patentschrift :
20.02.85

(51) Int. Cl.⁴ : **H 02 B   1/08**

(21) Anmeldenummer : **82200348.9**

(22) Anmeldetag : **22.03.82**

(54) **Elektrischer Schaltschrank.**

(30) Priorität : **31.03.81 DE 3112749**

(43) Veröffentlichungstag der Anmeldung :
**20.10.82 Patentblatt 82/42**

(45) Bekanntmachung des Hinweises auf die Patenterteilung : **20.02.85 Patentblatt 85/08**

(84) Benannte Vertragsstaaten :
**CH DE FR LI NL**

(56) Entgegenhaltungen :
**DE-A- 2 427 994**
**US-A- 2 719 251**

(73) Patentinhaber : **BBC Aktiengesellschaft Brown,**
**Boveri & Cie.**
**Haselstrasse**
**CH-5401 Baden (CH)**

(72) Erfinder : **Fischer, Dieter**
**Kurt-Schuhmacherstrasse 1**
**D-6940 Weinheim (DE)**
Erfinder : **Grass, Hermann**
**Grenzhöferstrasse 76**
**D-6803 Edingen-Neckarhausen (DE)**

(74) Vertreter : **Fritsch, Klaus, Dipl.-Ing. et al**
**Richard Wagner Strasse 1a**
**D-6701 Hochdorf-Assenheim 2 (DE)**

## Beschreibung

Die Erfindung betrifft einen elektrischen Schaltschrank, in dem mittels eines aus Gehäuseelementen bestehenden Gehäuses ein Schalt-, Meß- und/oder Regelgeräte aufnehmender Raum abgeteilt ist, welches Gehäuse eine nach vorne zu öffnende Abdecktafel aufweist, in die Anzeigeinstrumente und Bedienorgane eingesetzt sind.

Elektrische Schaltschränke nehmen neben Schaltgeräten auch Meß- und Regelgeräte auf, die unter bestimmten Voraussetzungen in einem eigenen, vom übrigen Schaltschrankbereich abgetrennten Raum untergebracht werden müssen. Bei bekannten Schaltschränken ist dieser Raum zur Aufnahme von Meß- und Regelgeräten (gegebenenfalls können auch Niederspannungsschaltgeräte darin untergebracht sein) dadurch gebildet, daß an dem Schaltschrank selbst bzw. an dem Rahmen des Schaltschrankes Wände angebracht sind, die den Schaltschrankraum von dem besagten Raum abschotten. Die Montage dieser Wände kann werkseitig erfolgen ; da wenigstens drei Wände einzusetzen sind, ist der Aufwand relativ groß. Darüberhinaus muß noch eine Tafel angebracht werden, an der die einzelnen Meßgeräte befestigt werden können.

Ein Schaltschrank, in dem einzelne Räume durch Gehäuseelemente, in denen Schalt-, Meß- und/oder Regelgeräte untergebracht sind, ist aus der US-A-2 719 251 bekanntgeworden. Jedes der Gehäuseelemente ist aus mehreren Teilen, die aus Metallblechen bestehen, zusammengesetzt, so daß die Herstellung der Gehäuseelement aufwendig ist.

Aus der DE-A-2 427 994 ist ein Schaltschrank der eingangs genannten Art bekanntgeworden, der mehrere etwa U-förmige Gehäuseteile aufweist die an einem Schaltschrankrahmen gehaltert sind. Die Gehäuseteile werden aus etwa U-förmigen Grundelementen mit seitlich die beiden Schenkel überdeckenden Seitenwänden aus gitterartigem Material gebildet. Die Schenkel weisen nach vorne, und die Enden tragen eine Abdecktafel, in der Meß-Instrumente gehalten sind. Auch hier erfordert die Herstellung der aus drei- bzw. mit Abdecktafel vier-Grundelementen bestehenden Gehäuse mehrere Arbeitsschritte.

Aufgabe der Erfindung ist es daher, einen Schaltschrank der eingangs genannten Art zu schaffen, der einfacher hergestellt und montiert werden kann. Insbesondere sollen die einzelnen Gehäuseelemente schnell und einfach herstellbar sein.

Diese Aufgabe wird erfindungsgemäß dadurch gelöst, daß als Gehäusegrundelement ein einstückiger, aus Kunststoff bestehender, an der Oberseite offener, wannenartiger Körper vorgesehen ist, dessen zur Schaltschrank-Frontseite gerichtete Längswand durch die Abdecktafel ersetzt ist, daß die Abdecktafel um eine horizontale, an ihrer unteren Kante befindliche Drehachse herausklappbar und in der herausgeklappten Stellung arretierbar ist und daß das Gehäuseelement an seinem oberen, horizontal verlaufenden Rand zur Aufnahme eines den Unterbringungsraum für die einzubauenden Geräte vergrößernden Aufsatzes ausgebildet ist.

Eine besonders vorteilhafte Ausgestaltung kann dahingehen, daß an der Abdecktafel beidseitig je zwei parallel zur Klappachse verlaufende Zapfen in Abstand zueinander zugeordnet sind, daß in den Stirnwänden des Gehäusegrundelementes je zwei in dem Abstand der Zapfen entsprechenden Abstand angeordnete langlochartige Ausnehmungen vorgesehen sind, die nach vorne hin bzw. nach oben hin offen sind und von denen die untere länger ist als die obere, dergestalt, daß nach Anheben der Abdeckplatte die oberen Zapfen aus ihren Ausnehmungen herausgelangen, die unteren Zapfen jedoch noch in ihren Ausnehmungen verbleiben.

Dabei kann die Bodenwand des Gehäusegrundelementes einen solchen Abstand vom Grund der unteren Ausnehmungen besitzen, daß nach Hochheben und Herausklappen der Abdecktafel der freie Rand eines vorstehenden, umlaufenden Kragens der Abdecktafel auf der unteren Wand aufliegt.

Vorteilhaft kann dabei die vordere Kante der unteren Ausnehmung an ihrem oberen Ende einen nach innen in die Ausnehmung hineinragenden Vorsprung aufweisen, der als Anschlag für die unteren Zapfen beim Herausheben der Abdecktafel dient.

Aufgrund der besonderen Ausgestaltung der Ausnehmungen in den Stirnwänden des Gehäusegrundelementes kann die Abdecktafel mit den seitlich angeformten Zapfen von vorn an den Gehäuseseitenwänden angebracht werden, derart, daß die Zapfen in die Ausnehmungen eingeführt und dann die Abdecktafel abgesenkt werden bzw. wird. Aufgrund der Bemessung der Ausnehmungen dergestalt, daß die oben befindlichen Ausnehmungen eine geringere Tiefe als die unten befindlichen Ausnehmungen aufweisen, und aufgrund des Vorsehen des Vorsprunges an den unteren Ausnehmungen, kann die Abdecktafel herausgeklappt werden, derart, daß die oberen Zapfen aus den oberen Ausnehmungen herausgehoben werden ; die unteren Zapfen verbleiben noch in den unteren Ausnehmungen, und durch Auflegen des Randes des Kragens auf der unteren Bodenwand des Gehäusegrundelementes kann nach Herausklappen der Abdecktafel die unten aufgelegt werden, so daß sie schräg nach vorn herausgeklappt liegen bleibt. Mit dieser Maßnahme wird die Montage der einzelnen Meß- oder Regelgeräte, die an der Abdecktafel befestig sein können, erleichtert.

Eine weitere vorteilhafte Ausgestaltung der Erfindung kann dadurch gekennzeichnet sein, daß an den Innenflächen der hinteren Längswand des Gehäusegrundelementes eine horizontal verlaufende Leiste angeformt ist, an der Norm-Profiltragschienen befestigbar sind. In diesem Falle wird der Zugang zu den hinten auf der gegebenenfalls angebrachten Tragschiene befestigten Installationsgeräten insoweit erleichtert, als ein Abklemmen der zu den an der Abdecktafel befestigten Installationsgeräten führenden Leitungen nicht erforderlich wird.

Weitere vorteilhafte Ausgestaltungen sind den übrigen Unteransprüchen zu entnehmen.

So kann das Gehäusegrundelement nach den Merkmalen des Anspruches 5 ausgebildet sein. Diese Schräge an der Bodenwand, die eigentlich die Höhe des Gehäusegrundelementes nach hinten verkleinert, hat die Aufgabe, eine Ableitung der Schaltgase für unterhalb des Gehäuseelementes angeordnete Leistungsschalter zu schaffen.

Zusätzlich zu der Ausgestaltung nach dem Anspruch 7 kann auch die Abdecktafel im Inneren des Kragens Vorprägungen aufweisen, und an diesen Vorprägungen können Wandteile herausgebrochen werden, so daß ein Zugang zu den einzelnen Meßgeräten möglich wird, bzw. die Meßgeräte nach außen sichtbar werden. Der Kragen hat noch den weiteren Vorteil, daß er dann, wenn eine Tür im Schaltschrank vorgesehen ist, gemäß Ansprüche 10 und 11, durch eine Öffnung in der Tür hindurchragt, so daß die Öffnung in der Tür den Kragen eng umgibt, wodurch zwischen der Tür und der Tafel die Dichtung angebracht werden kann, so daß eine hohe Schutzart für die im Inneren des Gehäusegrundelementes befindlichen Meß-, Steuer- oder Regelgeräte bzw. Schaltgeräte erzielt wird.

Bei der Ausgestaltung nach dem Anspruch 9 kann das Gehäusegrundelement, das nach vorne hin und auch nach oben hin offen sein kann, zusätzlich durch Aufsetzen eines Aufsatzes, vorzugsweise aus Stahl, ergänzt werden, so daß der Raum, in dem sich die Installationsgeräte befinden, vergrößert werden kann.

Das Gehäusegrundelement besteht vorzugsweise aus Polyurethan-Hartintegralschaum, wogegen die Abdecktafel aus glasfaserverstärktem Kunststoff, insbesondere aus glasfaserverstärktem Thermoplast bestehen kann.

Ein Ausführungsbeispiel der Erfindung wird anhand eines in der Figur dargestellten Ausführungsbeispieles beschrieben.

Es zeigt:

Figur 1 eine Aufsicht von oben auf ein erfindungsgemäßes Gehäusegrundelement,

Figur 2 eine Seitenansicht auf das Gehäusegrundelement gemäß der Pfeilrichtung A, mit eingebauter Tafel,

Figur 3 eine Schnittlinie gemäß der Linie III-III in der Fig. 1,

Figur 4 eine Teilansicht im Bereich B der Fig. 2 mit herausgeklappter Abdecktafel,

Figur 5 einen Querschnitt durch die Tafel gemäß Fig. 5 und

Figur 6 eine teilweise Aufsicht auf die Schaltschranktür mit Abdecktafel.

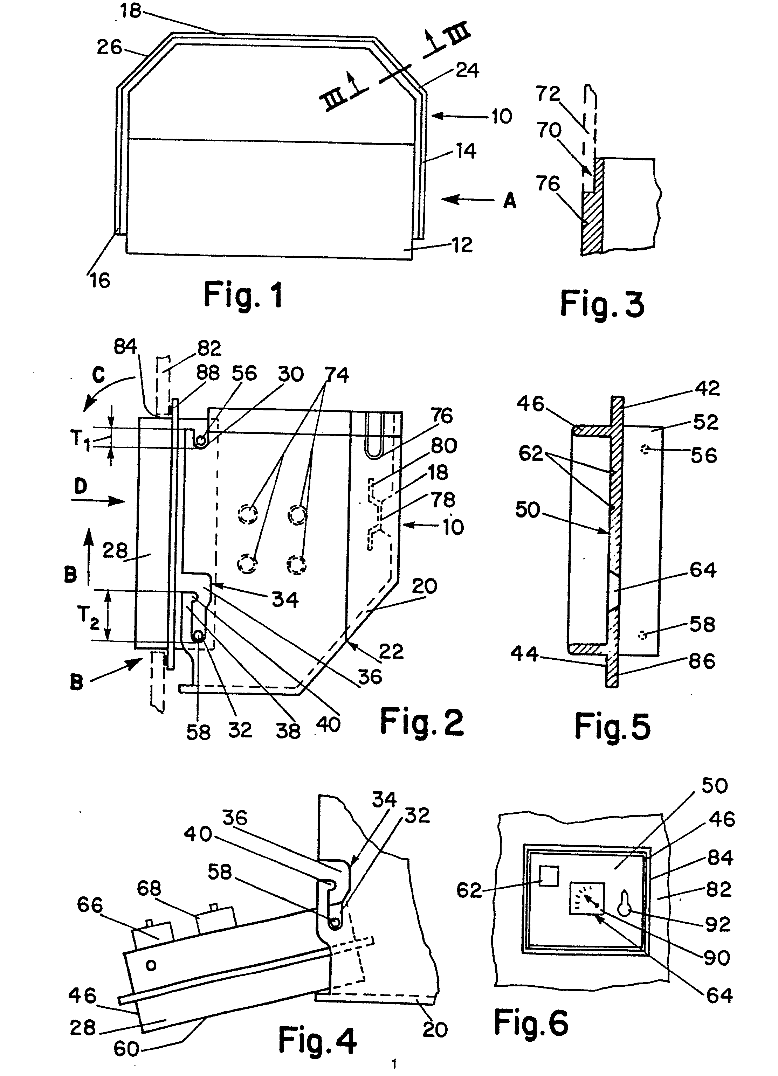

Ein wannenartiges Gehäusegrundelement 10, besitzt eine Bodenwand 20, zwei sich gegenüberliegende vertikal verlaufende Stirnwände 14 und 16 und eine das Gehäuseelement nach hinten abschließende hintere Längswand 18. Wie aus der Fig. 2 ersichtlich ist, besitzt die Bodenwand 20 einen vorderen horizontalen Bereich Abschnitt, an den sich ein unter einem Winkel von ca. 40° zu dem vorderen Bereich 20 verlaufender schräger Bereich 22 anschließt, der dann übergeht in die hintere Längswand 18. Die beiden Stirnwände 14 und 16 gehen über je eine Zwischenwandstücke 24 und 26 in die Längswand 18 über, wobei die Zwischenwandstücke 24, 26 unter einem Winkel von ca. 45° zu den Stirnwänden 14, 16 bzw. zu der Längswand 18 verlaufen. Der schräge Bereich 22 dient dazu, Schaltgase abzuführen bzw. abzuleiten, die von unterhalb des Gehäusegrundelementes 10 angeordneten Leistungsschaltern herrühren.

Das Gehäusegrundelement 10, das nach oben hin offen ist, ist nach vorn hin mittels einer Abdecktafel 28 abgedeckt, die die Größe der nach vorne hin offenen Seite des Gehäusegrundelementes 10 besitzt.

Zur Halterung der Tafel 28 sind an den vorderen, vertikal verlaufenden Seitenkanten der Stirnwände 14, 16 annähernd langlochartige Ausnehmungen 30 bzw. 32 angeordnet, von denen die obere Ausnehmung nach oben hin offen ist und eine Tiefe $T_1$ besitzt. Die Tiefe $T_2$ der unteren Ausnehmung 32 ist gegenüber der der oberen Ausnehmung 30 deutlich größer. Die Ausnehmung 32 bildet in ihrem oberen Bereich 34 eine nach innen abgekröpfte Schikane 36 und schwenkt dann senkrecht zur vorderen Kante hin um, so daß die Ausnehmung 32 nach vorne hin offen ist. Dadurch wird ein die Ausnehmung 32 nach vorne begrenzender Steg 38 gebildet, an dessen oberem Ende ein nach innen ragender Vorsprung 40 angeformt ist.

Die Abdecktafel 28 besitzt, wie aus der Figur 5 ersichtlich ist, eine Platte 42, an deren einen Seitenfläche 44 ein senkrecht zu der Seitenfläche 44 verlaufender Kragen 46 vorgesehen ist, der eine annähernd rechteckige Fläche 50 an der Tafel 42 umgibt. Auf der gegenüberliegenden Seite der Platte 42 sind an den beiden im montierten Zustand vertikal verlaufenden Kanten Leisten 52 vorgesehen, von denen in der Figur 5 nur die hintere Leiste ersichtlich ist. An der Außenfläche dieser Leisten sind Zapfen 56 und 58 vorgesehen, die in die Ausnehmungen 30 bzw. 32 eingefügt werden können. Die Montage der Tafel 28 erfolgt derart, daß zunächst die unten befindlichen Zapfen 58 in die Ausnehmung 32 eingefügt werden, die annähernd in den Bereich 34, also in den Bereich der Schikane 36 gelangen; sodann kann die Platte 42 so an das Gehäusegrundelement 10 angefügt werden, daß die Zapfen 56 in die obere Ausnehmung 30 eingehängt werden können. Dadurch ist die Tafel in montierten Zustand über die Zapfen 56 und 58 in den Ausnehmungen 30 und 32 eingehängt und festgehalten.

Wie aus der Figur 4 ersichtlich ist, kann die Tafel 28 auch herausgeklappt werden. Zu diesem Zwecke wird die Tafel zunächst in Pfeilrichtung B nach oben angehoben, bis der Zapfen 56 aus der Ausnehmung 30 herausgehoben ist. Dabei befindet sich der Zapfen bzw. befinden sich die Zapfen 58 noch im Inneren der unteren Ausnehmung 32, da die Vorsprünge 14 ein glattes Herausheben der Zapfen zumindest behindern. Wenn also die Zapfen 56 aus den oberen Ausnehmungen 30 herausgehoben sind, kann die Platte 42 entgegen dem Uhrzeigersinn in Pfeilrichtung C herumgeklappt werden, derart, bis der Rand 60 des Kragens 46 an der Bodenwand 20 zum Aufliegen gelangt. Die Tafel 28 ist dann in einer Lage, in der man ohne weiteres in das Innere des Gehäusegrundelementes 10 eingreifen kann.

Der Bereich 50 der Platte 42 besitzt Vorprägungen 62 und an diesen Vorprägungen 62 können Öffnungen 64 herausgebrochen werden. An diesen Öffnungen 64 bzw. an der Platte 42 im Inneren des Kragens 46 können Meßgeräte 66 oder Regelgeräte 68 gehalten werden, wie an der Figur 4 ersichtlich ist.

An der nach oben hin weisenden Kante der Wände 14, 16 und 18 ist an deren Außenfläche ein Rücksprung 70 vorgesehen, so daß über den Rücksprung 70 ein strichliert in der Figur 3 gezeigter Aufsatz 72 aufsetzbar ist, wodurch der durch das Gehäusegrundelement gebildete Raum vergrößert werden kann.

An den Stirnwänden 14, 16 befinden sich, wie aus der Figur 2 ersichtlich, kreisförmige Vorprägungen 74, längs derer Wandteile herausbrechbar sind, um Kabeleinführungsöffnungen ins Innere des Gehäusegrundelementes 10 herzustellen. Auch an den Zwischenwandstücken 24 und 26 können Vorprägungen 76 vorgesehen sein, an denen dort befindliche Wandteile herausgebrochen werden können. An der Längswand 18 kann eine Leiste 78 angeformt sein, wie in der Figur 2 strichliert dargestellt ist, an der Normprofiltragschiene 80 befestigt werden können.

In der Figur 2 ist ein Teil einer Schaltschranktür 82 gezeigt. Diese Tür 82 hat eine Öffnung 84, die den Kragen 46 verhältnismäßig eng umgibt. Die Platte 42, die über den Kragen 46 hinausragt, bildet außerhalb des Kragens 46 einen umlaufenden Flansch 86, der die Öffnung 84 in der Tür 82 überragt. Dadurch besteht die Möglichkeit, zwischen der Tür 82 und dem Flansch 86 eine umlaufende Dichtung 88 einzufügen, wodurch zusätzlich der Raum im Inneren des Gehäusegrundelementes 10 bzw. im Inneren des Schaltschrankes für eine höhere Schutzart eingerichtet werden kann.

Die Figur 6 zeigt dabei eine Ansicht der Anordnung gemäß Figur 2 in Pfeilrichtung D in verkleinertem Maßstab. Dabei ist die Tür 82 mit ihrer Öffnung 84 zu sehen, die den Kragen 46, der eine rechteckförmige Fläche 50 umgibt, diecht umfaßt. Im Inneren der Fläche 50 sind Vorprägungen 62 und die Durchbrüche 64 durchdringende Meßgeräte 90 und Schaltgeräte 92 zu sehen.

Für das Gehäusegrundelement 10 verwendet man vorzugsweise einen Polyurethanhartintegralschaum und die Abdecktafel 28 kann beispielsweise aus glasfaserverstärktem Thermoplast hergestellt sein.

**Ansprüche**

1. Schaltschrank, in dem mittels eines aus Gehäuseelementen bestehenden Gehäuses ein Schalt-, Meß- und/oder Regelgeräte aufnehmender Raum abgeteilt ist, welches Gehäuse eine nach vorne zu öffnende Abdecktafel (28) aufweist, in die Anzeigeinstrumente (90) und Bedienorgane (92) eingesetzt sind, dadurch gekennzeichnet, daß als Gehäusegrundelement (10) ein einstückiger, aus Kunststoff bestehender, an der Oberseite offener, wannenartiger Körper (10) vorgesehen ist, dessen zur Schaltschrank-Frontseite gerichtete Längswand durch die Abdecktafel (28) ersetzt ist, daß die Abdecktafel (28) um eine horizontale, an ihrer unteren Kante befindliche Drehachse herausklappbar und in der herausgeklappten Stellung arretierbar ist und daß das Gehäuseelement (10) an seinem oberen, horizontal verlaufenden Rand zur Aufnahme eines den Unterbringungsraum für die einzubauenden Geräte vergrößernden Aufsatzes ausgebildet ist.

2. Schaltschrank nach Anspruch 1, dadurch gekennzeichnet, daß an der Abdecktafel (28) beidseitig je zwei parallel zur Klappachse verlaufende Zapfen (56, 58) in Abstand zueinander zugeordnet sind, daß in den Stirnwänden des Gehäusegrundelementes (10) je zwei in dem Abstand der Zapfen (56, 58) entsprechenden Abstand angeordnete langlochartige Ausnehmungen (30, 32) vorgesehen sind, die nach vorne hin bzw. nach oben hin offen sind und von denen die untere (32) länger ist als die obere (30), dergestalt, daß nach Anheben der Abdeckplatte (28) die oberen Zapfen (56) aus ihren Ausnehmungen (30) herausgelangen, die unteren Zapfen (58) jedoch noch in ihren Ausnehmungen (32) verbleiben.

3. Schaltschrank nach Anspruch 2, dadurch gekennzeichnet, daß die Bodenwand (20) des Gehäusegrundelementes (10) einen solchen Abstand vom Grund der unteren Ausnehmungen (32) besitzt, daß nach Hochheben und Herausklappen der Abdecktafel (28) der freie Rand eines vorstehenden, umlaufenden Kragens (46) der Abdecktafel auf der unteren Wand aufliegt.

4. Schaltschrank nach Anspruch 3, dadurch gekennzeichnet, daß die vordere Kante der unteren Ausnehmung (32) an ihrem oberen Ende einen nach innen in die Ausnehmung hineinragenden Vorsprung (40) aufweist, der als Anschlag für die unteren Zapfen (58) beim Herausheben der Abdecktafel (28) dient.

5. Schaltschrank nach einem der Ansprüche 1 bis 4, dadurch gekennzeichnet, daß die Bodenwand (20) des Gehäusegrundelementes (10) schräg ansteigend verläuft, derart, daß die Höhe des Raumes nach hinten kleiner wird.

6. Schaltschrank nach einem der Ansprüche 1 bis 5, dadurch gekennzeichnet, daß die Stirnwände (14, 16) mit der hinteren Längswand (18) des Gehäusegrundelements (10) über unter einem Winkel zu den Stirnwänden (14, 16) verlaufende Zwischenwandstücke (24, 26) verbunden sind.

7. Schaltschrank nach Anspruch 6, dadurch gekennzeichnet, daß in den Stirnwänden (14, 16) und/oder in den Zwischenwandstücken (24, 26) Vorprägungen (76) vorgesehen sind, längs derer Wandbereiche zur bildung von Öffnungen herausbrechbar sind.

8. Schaltschrank nach einem der Ansprüche 1 bis 7, dadurch gekennzeichnet, daß an den Innenflächen der hinteren Längswand (18) des Gehäusegrundelementes (10) eine horizontal verlaufende Leiste (78) angeformt ist, an der Norm-Profiltragschienen (80) befestigbar sind.

9. Schaltschrank nach einem der Ansprüche 1 bis 8, dadurch gekennzeichnet, daß im Bereich des oberen Randes an der Außenfläche der Wände bzw. Wandteile des Gehäusegrundelementes (10) ein Rücksprung (70) vorgesehen ist.

10. Schaltschrank nach einem der Ansprüche 3 bis 9, dadurch gekennzeichnet, daß bei Einbau mehrerer Gehäusegrundelemente (10) in den Schrank in der Schaltschranktür (82) der Anzahl der Abdecktafeln (28) entsprechend Öffnungen (84) vorgesehen sind, deren lichte Abmessungen den Außenabmessungen des umlaufenden Kragens (46) entsprechen, derart, daß die Kragen (46) durch die Öffnungen (84) in der Tür (82) hindurch nach außen vorspringen.

11. Schaltschrank nach Anspruch 10, dadurch gekennzeichnet, daß außerhalb der umlaufenden Kragen (46) zwischen der Tür und flanschartigen Außenbereichen (86) der Abdecktafeln (28) Dichtungen (88) vorgesehen sind.

## Claims

1. Switchbox in which a space receiving switchgear, measuring instruments and/or control devices is divided off by means of a housing consisting of housing elements and having a cover panel (28) which is to be opened forwards and into which indicator instruments (90) and operating implements (92) are inserted, characterised in that there is as a basic housing element (10) a one-piece trough-like body (10) which consists of plastic and is open on the top side and of which the longitudinal wall directed towards the front side of the switchbox is replaced by the cover panel (28), in that the cover panel (28) can be swung out about a horizontal axis of rotation located at its lower edge and can be locked in the swungout position, and in that the housing element (10) is designed, at its upper edge extending horizontally, to receive an attachment which enlarges the accommodation space for the equipment to be installed.

2. Switchbox according to Claim 1, characterised in that two pins (56, 58) extending parallel to the switching axis are arranged at a distance from one another on each of the two sides of the cover panel (28), and in that there are in each of the end walls of the basic housing element (10) two slotlike recesses (30, 32) which are arranged at a distance from one another corresponding to the distance between the pins (56, 58) and are open towards the front and towards the top respectively and the lower (32) of which is longer than the upper (30), in such a way that, after the cover panel (28) has been lifted, the upper pins (56) pass out of their recesses (30), but the lower pins (58) still remain in their recesses (32).

3. Switchbox according to Claim 2, characterised in that the bottom wall (20) of the basic housing element (10) is at such a distance from the bottom of the lower recesses (32) that, after the cover panel (28) has been lifted up and swung out, the free edge of a projecting continuous collar (46) of the cover panel rests on the lower wall.

4. Switchbox according to Claim 3, characterised in that the front edge of the lower recess (32) has at its upper end a projection (40) which extends inwards into the recess and which serves as a stop for the lower pins (58) when the cover panel (28) is lifted out.

5. Switchbox according to one of Claims 1 to 4, characterised in that the bottom wall (20) of the basic housing element (10) rises obliquely in such a way that the height of the space lessens towards the rear.

6. Switchbox according to one of Claims 1 to 5, characterised in that the end walls (14, 16) are connected to the rear longitudinal wall (18) of the basic housing element (10) via intermediate-wall pieces (24, 26) which extend at an angle to the end walls (14, 16).

7. Switchbox according to Claim 6, characterised in that in the end walls (14, 16) and/or in the intermediate-wall pieces (24, 26) there are pre-stamped portions (76) along which wall regions can be broken out to form orifices.

8. Switchbox according to one of Claims 1 to 7, characterised in that a horizontally extending strip (78), to which standard profiled supporting rails (80) can be fastened, is formed on the inner surfaces of the rear longitudinal wall (18) of the basic housing element (10).

9. Switchbox according to one of Claims 1 to 8, characterised in that in the region of the upper edge an offset (70) is provided on the outer surface of the walls or wall parts of the basic housing element (10).

10. Switchbox according to one of Claims 3 to 9, characterised in that, when several basic housing elements (10) are installed in the switchbox, orifices (84) corresponding to the number of cover panels (28) are provided in the switchbox door (82), the clear dimensions of these orifices corresponding to the outer dimensions of the continuous collar (46), in such a way that the collars (46) project outwards through the orifices (84) in the door (82).

11. Switchbox according to Claim 10, characterised in that gaskets (88) are provided outside the continuous collars (46) between the door and flange-like outer regions (86) of the cover panels (28).

**Revendications**

1. Armoire de commutation, dans laquelle un espace recevant des appareils de commutation, de mesure et/ou de réglage est subdivisé au moyen d'un boîtier consistant en des éléments de boîtier, ce boîtier comportant un panneau de recouvrement (28) à ouverture vers l'avant, dans lequel sont incorporés des instruments indicateurs (90) et des organes de manœuvre (92), caractérisée par le fait qu'il est prévu, en tant qu'élément de base (10) du boîtier, un corps monobloc (10) en forme d'auge, fabriqué en matière plastique et ouvert à sa face supérieure, dont la paroi longitudinale tournée vers le côté frontal de l'armoire de commutation est remplacée par le panneau de recouvrement (28) ; par le fait que le panneau de recouvrement (28) peut être sorti par rabat autour d'un axe horizontal de rotation situé à son arête inférieure et être bloqué dans sa position rabattue vers l'extérieur ; et par le fait que l'élément (10) du boîtier est réalisé, sur son bord supérieur s'étendant horizontalement, de façon à recevoir un chapeau qui agrandit l'espace abritant les appareils devant être incorporés.

2. Armoire de commutation selon la revendication 1, caractérisée par le fait que deux tourillons respectifs (56, 58), s'étendant parallèlement à l'axe de pivotement, coopèrent mutuellement à distance l'un de l'autre des deux côtés du panneau de recouvrement (28) ; et par le fait que deux évidements respectifs (30, 32) en forme de boutonnières, disposés avec un espacement correspondant à la distance entre les tourillons (56, 58), sont prévus dans les parois frontales de l'élément de base (10) du boîtier, évidements qui sont ouverts vers l'avant ou vers le haut, respectivement, et parmi lesquels l'évidement inférieur (32) est plus long que l'évidement supérieur (30), de telle sorte que les tourillons supérieurs (56) sortent de leurs évidements (30) après le soulèvement du panneau de recouvrement (28), mais que les tourillons inférieurs (58) demeurent dans leurs évidements (32).

3. Armoire de commutation selon la revendication 2, caractérisée par le fait que la paroi de fond (20) de l'élément de base (10) du boîtier est espacée du fond des évidements inférieurs (32) d'une distance telle que, après le soulèvement et le basculement du panneau de recouvrement (28) vers l'extérieur, le bord libre d'une collerette périphérique saillante (46) dudit panneau de recouvrement s'applique contre la paroi inférieure.

4. Armoire de commutation selon la revendication 3, caractérisée par le fait que l'arête antérieure de l'évidement inférieur (32) présente, à son extrémité supérieure, une protubérance (40) saillant vers l'intérieur dans ledit évidement et servant de butée pour les tourillons inférieurs (58) lorsque le panneau de recouvrement (28) est sorti par soulèvement.

5. Armoire de commutation selon l'une des revendications 1 à 4, caractérisée par le fait que la paroi de fond (20) de l'élément de base (10) du boîtier s'étend à l'oblique vers le haut, de sorte que la hauteur de l'espace diminue vers l'arrière.

6. Armoire de commutation selon l'une des revendications 1 à 5, caractérisée par le fait que les parois frontales (14, 16) sont reliées à la paroi longitudinale postérieure (18) de l'élément de base (10) du boîtier par l'intermédiaire de pans (24, 26) de parois intercalaires inclinés par rapport auxdites parois frontales (14, 16).

7. Armoire de commutation selon la revendication 6, caractérisée par le fait que des empreintes préformées (76) sont prévues dans les parois frontales (14, 16) et/ou dans les pans (24, 26) de parois intercalaires, des régions de parois pouvant être rompues le long de ces empreintes en vue de former des orifices.

8. Armoire de commutation selon l'une des revendications 1 à 7, caractérisée par le fait qu'une moulure (78) s'étendant horizontalement est venue de moulage sur les faces internes de la paroi longitudinale postérieure (18) de l'élément de base (10) du boîtier, des rails de support profilés (80) normalisés pouvant être fixés à cette moulure.

9. Armoire de commutation selon l'une des revendications 1 à 8, caractérisée par le fait qu'un décrochement (70) est prévu au voisinage du bord supérieur à la face externe des parois ou régions de parois de l'élément de base (10) du boîtier.

10. Armoire de commutation selon l'une des revendications 3 à 9, caractérisée par le fait que, dans le cas où plusieurs éléments de base (10) de boîtiers sont incorporés dans l'armoire, la porte (82) de cette armoire est percée d'ouvertures (84) dont le nombre correspond à celui des panneaux de recouvrement (28) et dont les cotes internes correspondent aux cotes externes de la collerette périphérique (46), de façon que les collerettes (46) fassent saillie vers l'extérieur en traversant de part en part les ouvertures (84) pratiquées dans la porte (82).

11. Armoire de commutation selon la revendication 10, caractérisée par le fait que des garnitures d'étanchéité (88) sont disposées à l'extérieur des collerettes périphériques (46), entre la porte et des régions externes (86) des panneaux de recouvrement (28) conformées en des collets.

0 062 937

Fig. 1

Fig. 3

Fig. 2

Fig. 5

Fig. 4

Fig. 6